# EUROPEAN PATENT SPECIFICATION

(11) **EP 3 156 607 B1**
(45) Date of publication and mention of the grant of the patent: **16.03.2022**
(21) Application number: 16193019.3
(22) Date of filing: 10.10.2016
(51) Int. Cl.: F01D 9/04

(54) **TURBINE NOZZLE WITH COOLING CHANNEL COOLANT DISTRIBUTION PLENUM**
TURBINENLEITSCHAUFELN MIT GEKÜHLTEM INNEREN DECKBAND
DISTRIBUTEUR DE TURBINE À GAZ AVEC PLENUM

(30) Priority: 12.10.2015 US 201514880580
(43) Date of publication of application: 19.04.2017
(73) Proprietor: General Electric Company, Schenectady, NY 12345 (US)
(72) Inventor: DUTTA, Sandip, Greenville, SC 29615 (US); LACY, Benjamin Paul, Greenville, SC 29615 (US); ITZEL, Gary Michael, Greenville, SC 29615 (US); VEHR, James William, Greenville, SC 29615 (US)
(74) Representative: Novagraaf Group

(56) References cited:
- EP-A1- 2 740 898
- EP-A2- 2 372 086
- US-A1- 2005 100 437

## Description

### FIELD OF THE INVENTION

The present invention generally relates to a turbine nozzle for a gas turbine. More particularly, this invention relates to a turbine nozzle with cooling channels and a coolant distribution plenum defined within an inner or outer band of the turbine nozzle.

### BACKGROUND OF THE INVENTION

A gas turbine, such as an industrial, aircraft or marine gas turbine generally includes, in serial flow order, a compressor, a combustor and a turbine. The turbine has multiple stages with each stage including a row of turbine nozzles and an adjacent row of turbine rotor blades disposed downstream from the turbine nozzles. The turbine nozzles are held stationary within the turbine and the turbine rotor blades rotate with a rotor shaft. The various turbine stages define a hot gas path through the turbine.

During operation, the compressor provides compressed air to the combustor. The compressed air is mixed with fuel and burned in a combustion chamber or reaction zone defined within the combustor to produce a high velocity stream of hot gas. The hot gas flows from the combustor into the hot gas path of the turbine via a turbine inlet. As the hot gas flows through each successive stage, kinetic energy from the high velocity hot gas is transferred to the rows of turbine rotor blades, thus causing the rotor shaft to rotate and produce mechanical work.

Turbine efficiency may be related, at least in part, to the temperature of the hot gas flowing through the turbine hot gas path. For example, the higher the temperature of the hot gas, the greater the overall efficiency of the turbine. The maximum temperature of the hot gas is limited, at least in part, by material properties of the various turbine components such as the turbine nozzles and turbine rotor blades and by the effectiveness of various cooling circuits and a cooling medium that circulates through the cooling circuits to provide cooling to the various turbine components.

Turbine nozzles generally include an airfoil that extends in span between an inner band or shroud and an outer band or shroud. The inner band and the outer band define inner and outer flow boundaries of the hot gas path and are exposed to the hot gases. The airfoil may be cooled by passing a cooling medium such as compressed air through a central or core cooling channel that extends radially through the airfoil portion of the turbine nozzle. A portion of the cooling medium flows through various film holes defined along the airfoil, thus providing film cooling to the airfoil.

US 2005/100437 discloses a cooling system for nozzle edges includes a chamber containing a cooling medium. First and second elongated plenums are disposed along opposite side edges of each platform. Inlet passages communicate cooling medium from the chamber into each plenum. Outlet passages from each plenum terminate in outlet holes in the side edges of the platform to cool the gap between adjacent nozzle segments. Passageways communicate with each plenum and terminate in film cooling holes to film cool platform surfaces. In each plenum, the inlet passages are not in direct line-of-sight flow communication with the outlet passages and passageways.

EP 2 372 086 discloses a cooling circuit for a turbine bucket having a shank, a platform and an airfoil. The cooling circuit includes a first cooling passage extending from an inlet located at a radially inward end of the shank and adapted to communicate with a turbine wheel-space, the first cooling passage, in use, supplying cooling air to a serpentine cooling circuit extending within and across at least one region of the platform. The serpentine cooling circuit connects with a separate internal cooling circuit in the airfoil, such that the cooling air used to cool the platform is re-used in the airfoil cooling circuit.

According to the teaching of EP 2 740 898 an airfoil includes an outer surface having a leading edge, a trailing edge downstream from the leading edge, and a convex surface between the leading and trailing edges. A cavity is inside the outer surface, and a platform is connected to the outer surface and defines a top surface around at least a portion of the outer surface. A first plurality of trenches is beneath the top surface of the platform upstream from the leading edge, wherein each trench in the first plurality of trenches is in fluid communication with the cavity inside the outer surface. A first plurality of cooling passages provide fluid communication from the first plurality of trenches through the top surface of the platform.

### BRIEF DESCRIPTION OF THE INVENTION

The invention relates to a turbine nozzle as set 2. out in the appended set of claims 1-7.

Aspects and advantages of the invention are set forth below in the following description, or may be obvious from the description, or may be learned through practice of the invention.

One example of the present invention is a turbine nozzle. The turbine nozzle includes an airfoil that extends in span from an inner band to an outer band where the inner band and the outer band define inner and outer flow boundaries of the turbine nozzle. The inner band defines a first set of cooling channels and a second set of cooling channels that are formed beneath a gas side surface of the inner band. The inner band further defines a coolant distribution plenum that is in fluid communication with the first and second sets of cooling channels. The coolant distribution plenum provides a stream of coolant to at least one of the first set of cooling channels and the second set of cooling channels.

Another example of the present invention is a turbine nozzle. The turbine nozzle includes an airfoil that extends in span from an inner band to an outer band where the inner band and the outer band define inner and outer flow boundaries of the turbine nozzle. The outer band defines a first set of cooling channels and a second set of cooling channels that are formed beneath a gas side surface of the outer band. The outer band further defines a coolant distribution plenum that is in fluid communication with the first and second sets of cooling channels. The coolant distribution plenum provides a stream of coolant to at least one of the first set of cooling channels and the second set of cooling channels.

Those of ordinary skill in the art will better appreciate the features and aspects of such embodiments, and others, upon review of the specification.

### BRIEF DESCRIPTION OF THE DRAWINGS

A full and enabling disclosure of the present invention is set forth more particularly in the remainder of the specification, including reference to the accompanying figures, in which:
FIG. 1 is a schematic view of an exemplary gas turbine as may incorporate various embodiments of the present invention;
FIG. 2 is a cross sectioned side view of an exemplary turbine section of a gas turbine as may incorporated in various embodiments of the present invention;
FIG. 3 is a perspective side view of an exemplary turbine nozzle as may incorporate one or more embodiments of the present invention;
FIG. 4 is a cross sectioned top view of a portion of the turbine nozzle including an inner band as shown in FIG. 3 taken along section line 4-4, according to at least one embodiment of the present invention;
FIG. 5 is an enlarged simplified cross sectional side view of a portion of the inner band as shown in FIG. 4, according to one or more embodiments of the present invention;
FIG. 6 is an enlarged simplified cross sectional side view of a portion of the inner band as shown in FIG. 4, according to one or more embodiments of the present invention;
FIG. 7 provides a top view flow diagram of the inner band according to one embodiment of the present invention;
FIG. 8 provides a top view flow diagram of the inner band according to one embodiment of the present invention;
FIG. 9 is a cross sectioned top view of a portion of the turbine nozzle including an inner band as shown in FIG. 3 taken along section line 9-9, according to at least one embodiment of the present invention;
FIG. 10 is an enlarged simplified cross sectional side view of a portion of the inner band as shown in FIG. 9, according to one or more embodiments of the present invention;
FIG. 11 is an enlarged simplified cross sectional side view of a portion of the inner band as shown in FIG. 9, according to one or more embodiments of the present invention;
FIG. 12 provides a top view flow diagram of the outer band according to one embodiment of the present invention; and
FIG. 13 provides a top view flow diagram of the outer band according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel and/or coaxially aligned to an axial centerline of a particular component.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Although exemplary embodiments of the present invention will be described generally in the context of a turbine nozzle for a land based power generating gas turbine for purposes of illustration, one of ordinary skill in the art will readily appreciate that embodiments of the present invention may be applied to any style or type of gas turbine and are not limited to land based power generating gas turbines unless specifically recited in the claims.

The invention as described, illustrated and claimed herein is generally directed to at least one of an inner band or an outer band portion of a turbine nozzle or other hot gas path component having one or more coolant distribution or supply plenums dedicated for subsurface cooling or micro-channels to provide fresh coolant to the channels and not spent coolant from other processes like pin bank or impingement. In other embodiments, the coolant distribution plenum may collect coolant from different cooling channels and then feed the coolant to another set of cooling channels disposed downstream so as to build a surface cooling network.

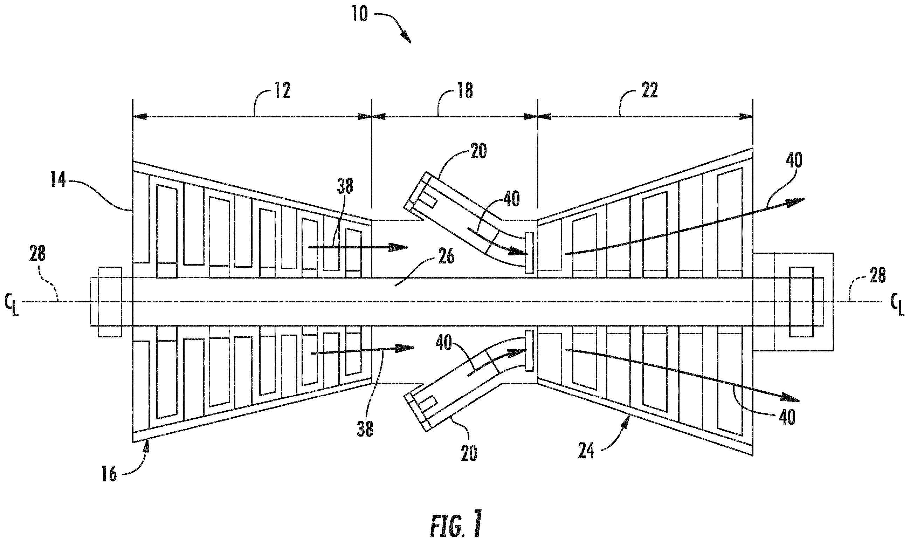

Referring now to the drawings, FIG. 1 illustrates a schematic of an exemplary gas turbine 10 as may incorporate various embodiments of the present invention. As shown, the gas turbine 10 generally includes a compressor section 12 having an inlet 14 disposed at an upstream end of an axial compressor 16. The gas turbine 10 further includes a combustion section 18 having one or more combustors 20 positioned downstream from the compressor 16 and a turbine section 22 including a turbine 24 such as an expansion turbine that is disposed downstream from the combustion section 18. A shaft 26 extends axially through the compressor 16 and the turbine 24 along an axial centerline 28 of the gas turbine 10.

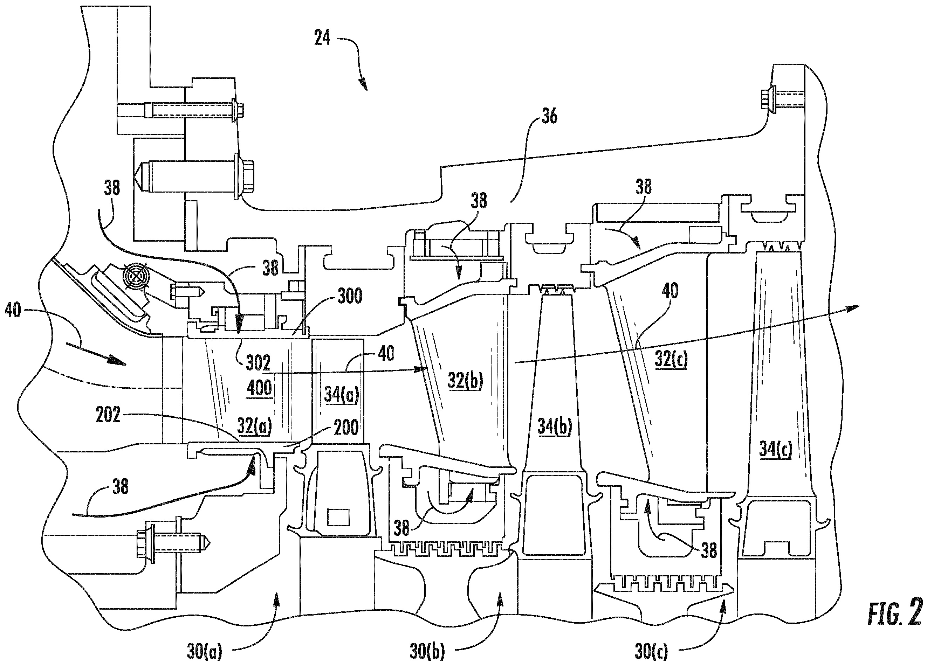

FIG. 2 provides a cross sectioned side view of an exemplary turbine 24 as may incorporate various embodiments of the present invention. As shown in FIG. 2, the turbine 24 may include multiple turbine stages. For example, the turbine 24 may include three turbine stages including a first stage 30(a), second stage 30(b) and third stage 30(c). The total number of turbine stages 30 may be more or less than three and embodiments of the present invention should not be limited to three turbine stages unless otherwise recited in the claims.

As shown in FIG. 2, each stage 30(a-c) includes, in serial flow order, a corresponding row of turbine nozzles 32(a), 32(b) and 32(c) and a corresponding row of turbine rotor blades 34(a), 34(b) and 34(c) axially spaced along the shaft 26 (FIG. 1). A casing or shell 36 circumferentially surrounds each stage 30(a-c) of the turbine nozzles 32(a-c) and the turbine rotor blades 34(a-c). The turbine nozzles 32(a-c) remain stationary relative to the turbine rotor blades 34(a-c) during operation of the gas turbine 10. For example, the turbine nozzles 32 may be connected to the casing 36 or to a nozzle ring (not shown).

In operation, as shown in FIGS. 1 and 2 collectively, compressed air 38 from the compressor 16 is provided to the combustors 20 where it is mixed with fuel and burned to provide a stream of hot combustion gases 40 that flows from the combustors 20 into the turbine 24. At least a portion of the compressed air 38 may be used as a cooling medium for cooling the various components of the turbine such as the turbine nozzles 32(a-c) and the turbine rotor blades 34(a-c).

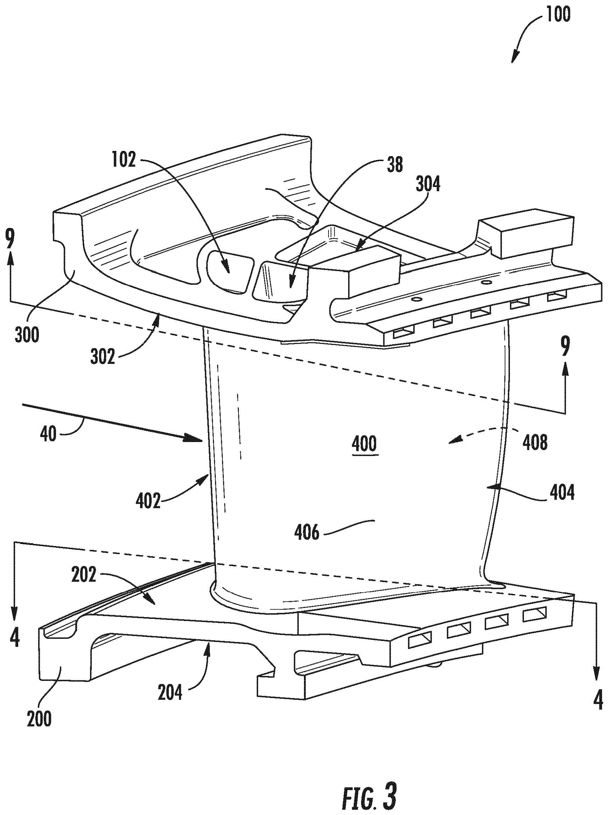

FIG. 3 provides a perspective view of an exemplary turbine nozzle 100 as may be incorporated into the turbine 24 as shown in FIG. 2 and as may incorporate various embodiments of the present invention. Turbine nozzle 100 may correspond with or be installed in place of any of turbine nozzles 32(a-c). In particular embodiments, turbine nozzle 100 corresponds with turbine nozzle 32(a) of the first stage 30(a) which may also be known in the industry as a stage one nozzle or SIN.

As shown in FIG. 3, the turbine nozzle 100 includes an inner band 200, an outer band 300 that is radially spaced from the inner band 200 and an airfoil 400 that extends in span from the inner band 200 to the outer band 300. The inner band 200 includes a gas side 202 and a back side 204 that is oriented radially inwardly from the gas side 202. The outer band 300 includes a gas side 302 and a back side 304 that is oriented radially outwardly from the gas side 302. As shown in FIGS. 2 and 3 collectively, the gas side 302 of the outer band 300 and the gas side 202 of the inner band 200 define inner and outer radial flow boundaries for the stream of hot combustion gases 40 flowing at high velocity from the combustors 20 through the turbine 24. As shown in FIG. 3, the airfoil 400 includes a leading edge portion 402, a trailing edge portion 404, a suction side wall 406 and a pressure side wall 408.

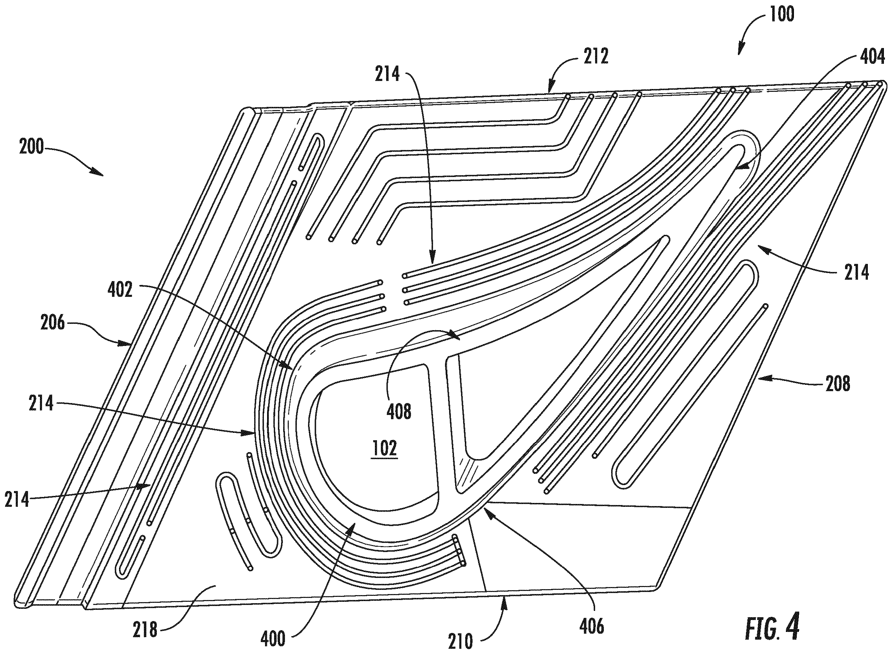

FIG. 4 provides a cross sectioned top view of a portion of the turbine nozzle 100 as taken along section line 4-4 as shown in FIG. 3 and includes a portion of the airfoil 400 and the inner band 200 according to one embodiment of the present invention. As shown in FIG. 4, the inner band 200 includes a forward wall 206 forward or upstream from the leading edge portion 402 of the airfoil 400, an aft wall 208 aft or downstream from the trailing edge portion 404, a suction side wall 210 and a pressure side wall 212. In particular arrangements, the turbine nozzle 100 includes and/or at least partially defines a primary cooling channel 102. In one embodiment, the primary cooling channel 102 extends radially or substantially radially through the outer band 300, the airfoil 400 and the inner band 200.

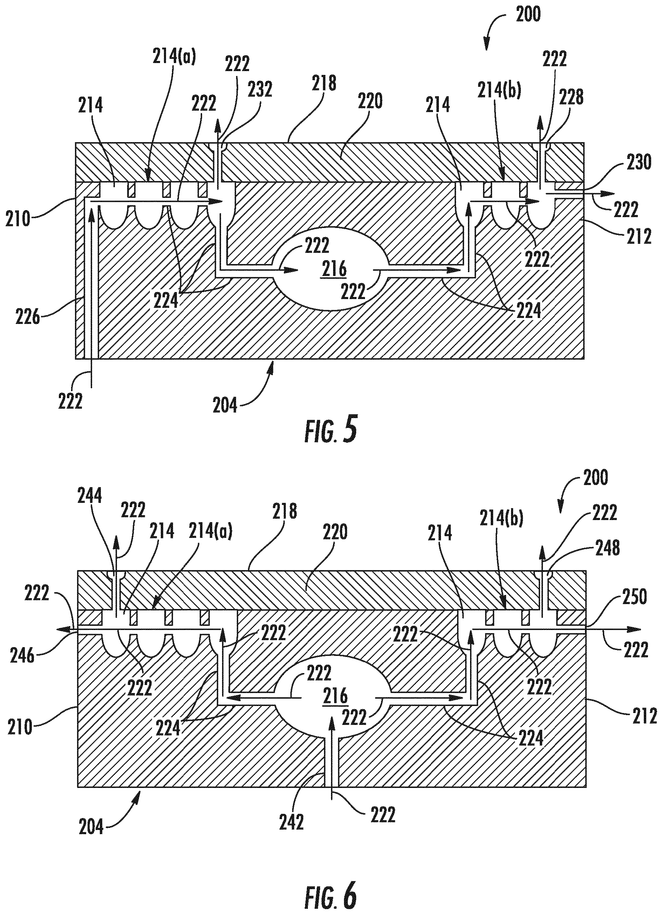

FIGS. 5 and 6 provide a simplified cross sectional view of a portion of the inner band 200 as shown in FIG. 4, according to at least one embodiment of the present invention. In one embodiment, as shown in FIGS. 4, 5 and 6 collectively, the inner band 200 defines a plurality of cooling channels 214 and a coolant distribution plenum 216 (FIG. 5) formed beneath a gas side surface 218 of the inner band 200. The plurality of cooling channels 214 may be machined, cast or otherwise formed beneath the gas side surface 218 of the inner band 200. In particular embodiments, as shown in FIGS. 5 and 6, the gas side surface 218 may be at least partially formed by one or more plates and/or a coating 220 which covers and/or seals the plurality of cooling channels 214.

As shown in FIGS. 4, 5 and 6, the plurality of cooling channels 214 may comprise multiple sets of cooling channels 214. For example, in one embodiment, as shown in FIGS. 5 and 6, the plurality of cooling channels 214 comprises, at least a first set of cooling channels 214(a) and a second set of cooling channels 214(b). A set of cooling channels 214 may comprise one or more cooling channels and is not limited to two or three cooling channels as illustrated in FIGS. 5 and 6 unless otherwise recited in the claims.

The plurality of cooling channels 214 may be disposed beneath the gas side surface 218 in various locations depending on particular cooling requirements of the inner band 200. For example, as shown in FIG. 4, at least some of the plurality of cooling channels 214 may be arranged or oriented so as to follow or substantially follow the curvature or profile of one or more of the leading edge portion 402, the suction side wall 406, the trialing edge portion 404 and the pressure side wall 408 of the airfoil 400. At least some of the cooling channels 214 may be disposed proximate to the suction side wall 210 or the aft wall 208 of the inner band 200 and/or proximate to the forward wall 206 of the inner band 200 between the suction side wall 210 and the pressure side wall 212.

In various embodiments, the coolant distribution plenum 216 is formed within the inner band 200 to provide a stream of coolant as indicated by arrows 222 in FIGS. 5 and 6, to at least one of the first set of cooling channels 214(a) and/or the second set of cooling channels 214 (b). In various embodiments, as shown in FIGS. 5 and 6, the inner band 200 includes and/or defines a plurality of internal passages 224 disposed beneath the gas side surface 218 and that provide for fluid communication of the coolant 222 between the coolant distribution plenum 216, the first set of cooling channels 214(a) and the second set of cooling channels 214(b).

In one embodiment, as shown in FIG. 5, the inner band 200 defines an inlet passage 226 that provides for direct fluid communication between a coolant supply such as the compressor 16 (FIG. 1) and the first set of cooling channels 214(a). In this configuration, the first set of cooling channels 214(a) is directly downstream from the coolant supply, the coolant distribution plenum 216 is directly downstream from the first set of cooling channels 214(a) and the second set of cooling channels 214(b) is directly downstream from the coolant distribution plenum 216. In particular embodiments, the inlet passage 226 may include an inlet defined along the back side 204 of the inner band 200.

In particular embodiments, as shown in FIG. 5, the second set of cooling channels 214(b) is in fluid communication with at least one coolant exhaust port 228 defined along the gas side surface 218 of the inner band 200. In one embodiment, the second set of cooling channels 214(b) is in fluid communication with at least one coolant exhaust port 230 defined along one of the pressure side wall 212 as shown in FIG. 5, or the suction side wall 210 of the inner band 200. In particular embodiments, the first set of cooling channels 214(a) is in fluid communication with at least one coolant exhaust port 232 defined along the gas side surface 218 of the inner band 200.

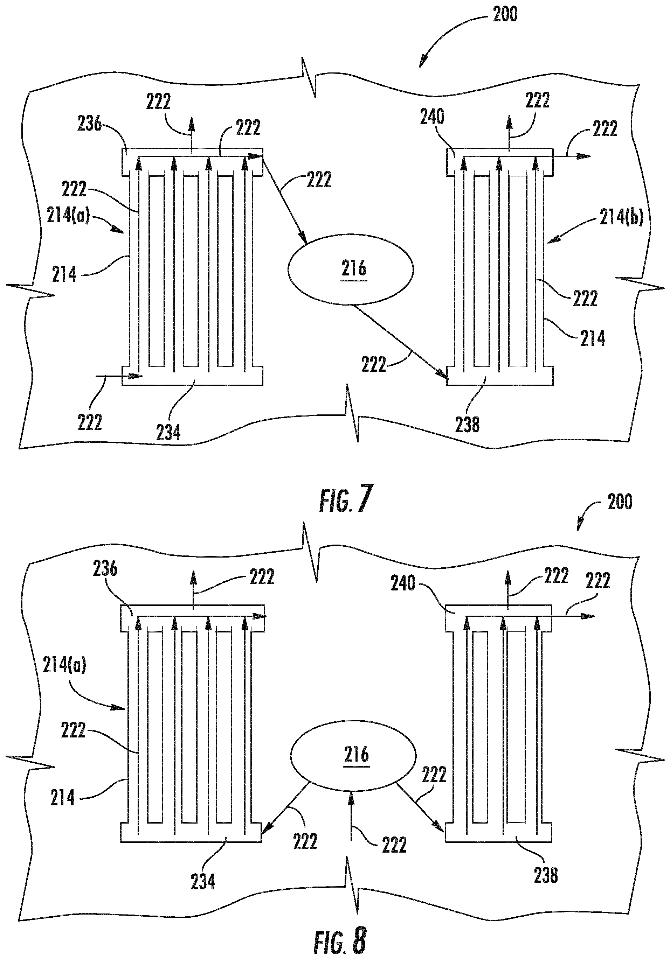

FIG. 7 provides a top view flow diagram of the inner band 200 according to the embodiment shown in FIG. 5. In operation, as shown in FIGS. 5 and 7 collectively, the coolant 222 travels through the inlet passage 226 and into the various cooling channels 214 of the first set of cooling channels 214(a), thus providing cooling to the gas side surface 218 above the cooling channels 214. For example, as shown in FIG. 7, the coolant may flow into a first coolant trench 234 which feeds the individual cooling channels 214 of the first set of cooling channels 214(a). The coolant 222 may then flow from the cooling channels 214 into a second coolant trench 236 and then on to the coolant distribution plenum 216 where it may be used to cool another portion of the inner band 200. The coolant 222 may then flow to a third coolant trench 238 which feeds the individual cooling channels 214 of the second set of cooling channels 214(b), thus providing cooling to the gas side surface 218 above the cooling channels 214 of the second set of cooling channels 214(b). The coolant 222 may then be exhausted from coolant exhaust port 228 which may be in fluid communication with a fourth coolant trench 240 to provide film cooling to the gas side surface 218 and/or from coolant exhaust port 230 to help form a seal between adjacent inner bands 200 of circumferentially adjacent turbine nozzles 100.

In particular embodiments, a portion of the coolant 222 may be exhausted from coolant exhaust port 232 to provide film cooling to the backside surface 218 proximate to the first set of cooling channels 214(a). Pressure within the coolant distribution plenum 216 is generally lower than pressure in the first set of cooling channels 214(a), pressure in the second set of cooling channels 214(b) is generally lower than pressure in the coolant distribution plenum and pressure just outside of the coolant exhaust ports 228, 220 and 230 is generally lower than the pressure in the first or second cooling channels 214(a), 214(b).

In one embodiment, as shown in FIG. 6, an inlet passage 242 provides for fluid communication or direct fluid communication between the coolant supply and the coolant distribution plenum 216. The inlet passage 242 may have an inlet disposed along the back side 204 of the inner band 200. The first set of cooling channels 214(a) and the second set of cooling channels 214(b) are directly downstream from the coolant distribution plenum 216. In one embodiment, the first set of cooling channels 214(a) is in fluid communication with at least one coolant exhaust port 244 defined along the gas side surface 218 of the inner band 200 and/or at least one coolant exhaust port 246 defined along the suction side wall 210 of the inner band 200. The second set of cooling channels 214(b) is in fluid communication with at least one coolant exhaust port 248 defined along the gas side surface 218 of the inner band 200 and/or at least one coolant exhaust port 250 defined along the pressure side wall 212 of the inner band 200.

FIG. 8 provides a top view flow diagram of the inner band 200 according to the embodiment shown in FIG. 5. In operation, as shown in FIGS. 5 and 8, the coolant 222 travels through the inlet passage 234 and into the coolant distribution plenum 216 where it may be used to provide cooling within the inner band 200. The coolant 222 is then distributed to the various cooling channels 214 of the first set of cooling channels 214(a) via coolant trench 234 and the various cooling channels 214 of the second set of cooling channels 214(b) via coolant trench 238. As the coolant flows through the cooling channels 214, cooling is provided to the gas side surface 218 above the cooling channels 214 of the first set of cooling channels 214(a) and above the second set of cooling channels 214(b). The coolant 222 may then be exhausted from the first set of cooling channels 214(a) via coolant trench 236 and one or more of coolant exhaust port 244 to provide film cooling to the gas side surface 218 and/or from coolant exhaust port 246 via coolant trench 240 to help form a seal between adjacent inner bands 200 of circumferentially adjacent turbine nozzles 100.

In addition or in the alternative, the coolant 222 may then be exhausted from the second set of cooling channels 214(b) via one or more of coolant exhaust port 248 to provide film cooling to the gas side surface 218 and/or from coolant exhaust port 250 to help form a seal between adjacent inner bands 200 of circumferentially adjacent turbine nozzles 100. Pressure within the coolant distribution plenum 216 is generally higher than pressure in the first set of cooling channels 214(a) or the pressure within the second set of cooling channels 214(b).

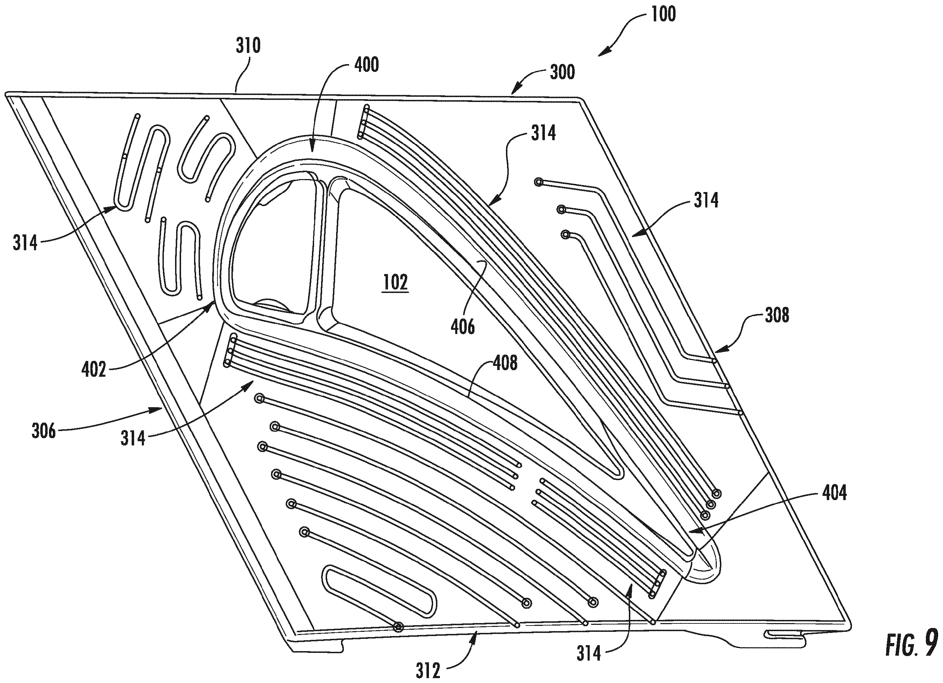

FIG. 9 provides a cross sectioned top view of a portion of the turbine nozzle 100 as taken along section line 9-9 as shown in FIG. 3, and includes a portion of the airfoil 400 and the outer band 300 according to one embodiment of the present invention. As shown in FIG. 9, the outer band 300 includes a forward wall 306 forward or upstream from the leading edge portion 402 of the airfoil 400, an aft wall 308 aft or downstream from the trailing edge portion 404, a suction side wall 310 and a pressure side wall 312. In particular arrangements, the turbine nozzle 100 includes and/or at least partially defines the primary cooling channel 102.

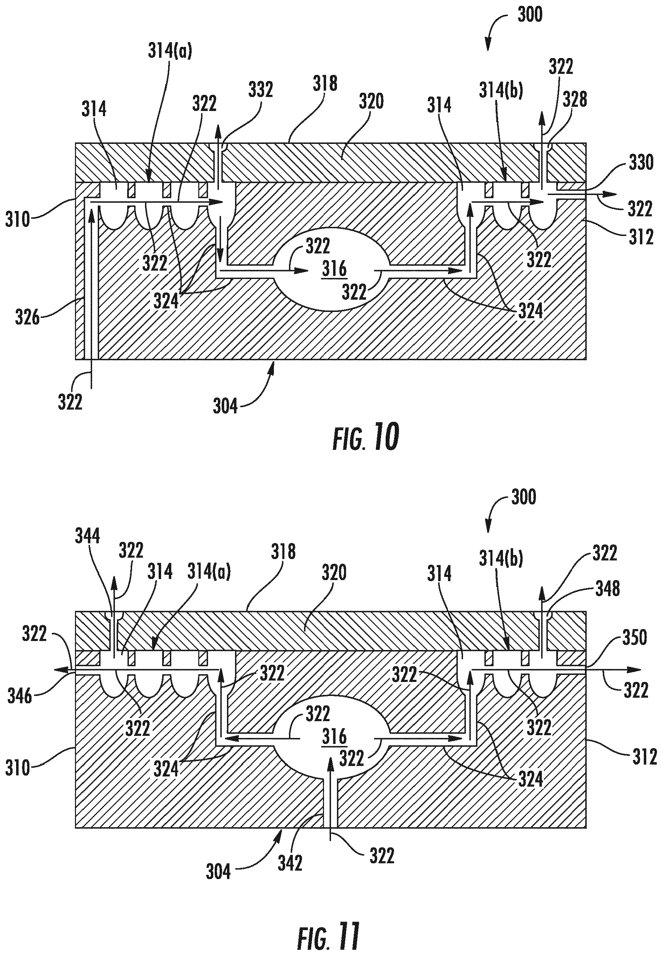

FIGS. 10 and 11 provide a simplified cross sectional view of a portion of the outer band 300 as shown in FIG. 9, according to at least one embodiment of the present invention. In one embodiment, as shown in FIGS. 9, 10 and 11 collectively, the outer band 300 defines a plurality of cooling channels 314 and a coolant distribution plenum 316 formed beneath a gas side surface 318 of the outer band 300. The plurality of cooling channels 314 may be machined, cast or otherwise formed beneath the gas side surface 318 of the outer band 300. In particular embodiments, as shown in FIGS. 5 and 6, the gas side surface 318 may be at least partially formed by one or more plates and/or a coating 320 which covers and/or seals the plurality of cooling channels 314.

As shown in FIGS. 9, 10 and 11, the plurality of cooling channels 314 may comprise multiple sets of cooling channels 314. For example, in one embodiment, as shown in FIGS. 8 and 9, the plurality of cooling channels 314 comprises, at least a first set of cooling channels 314(a) and a second set of cooling channels 314(b). A set of cooling channels 314 may comprise one or more cooling channels and is not limited to two or three cooling channels as illustrated in FIGS. 8 and 9 unless otherwise recited in the claims.

The plurality of cooling channels 314 may be disposed beneath the gas side surface 318 in various locations depending on particular cooling requirements of the outer band 300. For example, as shown in FIG. 9, at least some of the plurality of cooling channels 314 may be arranged or oriented so as to follow or substantially follow the curvature or profile of one or more of the leading edge portion 402, the suction side wall 406, the trialing edge portion 404 and the pressure side wall 408 of the airfoil 400. At least some of the cooling channels 314 may be disposed proximate to the suction side wall 310 or the aft wall 308 of the outer band 300 and/or proximate to the forward wall 306 of the outer band 300 between the suction side wall 310 and the pressure side wall 312.

In various embodiments, the coolant distribution plenum 316 is formed within the outer band 300 to provide a stream of coolant as indicated by arrows 322 in FIGS. 10 and 11, to at least one of the first set of cooling channels 314(a) and/or the second set of cooling channels 314 (b). In various embodiments, as shown in FIGS. 10 and 11, the outer band 300 includes and/or defines a plurality of internal passages 324 disposed beneath the gas side surface 318 and that provide for fluid communication of the coolant 322 between the coolant distribution plenum 316, the first set of cooling channels 314(a) and the second set of cooling channels 314(b).

In one embodiment, as shown in FIG. 10, the outer band 300 defines an inlet passage 326 that provides for direct fluid communication between a coolant supply such as the compressor 16 (FIG. 1) and the first set of cooling channels 314(a). In this configuration, the first set of cooling channels 314(a) is directly downstream from the coolant supply, the coolant distribution plenum 316 is directly downstream from the first set of cooling channels 314(a) and the second set of cooling channels 314(b) is directly downstream from the coolant distribution plenum 316. In particular embodiments, the inlet passage 326 may include an inlet defined along the back side 304 of the outer band 300.

In particular embodiments, as shown in FIG. 10, the second set of cooling channels 314(b) is in fluid communication with at least one coolant exhaust port 328 defined along the gas side surface 318 of the outer band 300. In one embodiment, the second set of cooling channels 314(b) is in fluid communication with at least one coolant exhaust port 330 defined along one of the pressure side wall 312 as shown in FIG. 5, or the suction side wall 310 of the outer band 300. In particular embodiments, the first set of cooling channels 314(a) is in fluid communication with at least one coolant exhaust port 332 defined along the gas side surface 318 of the outer band 300.

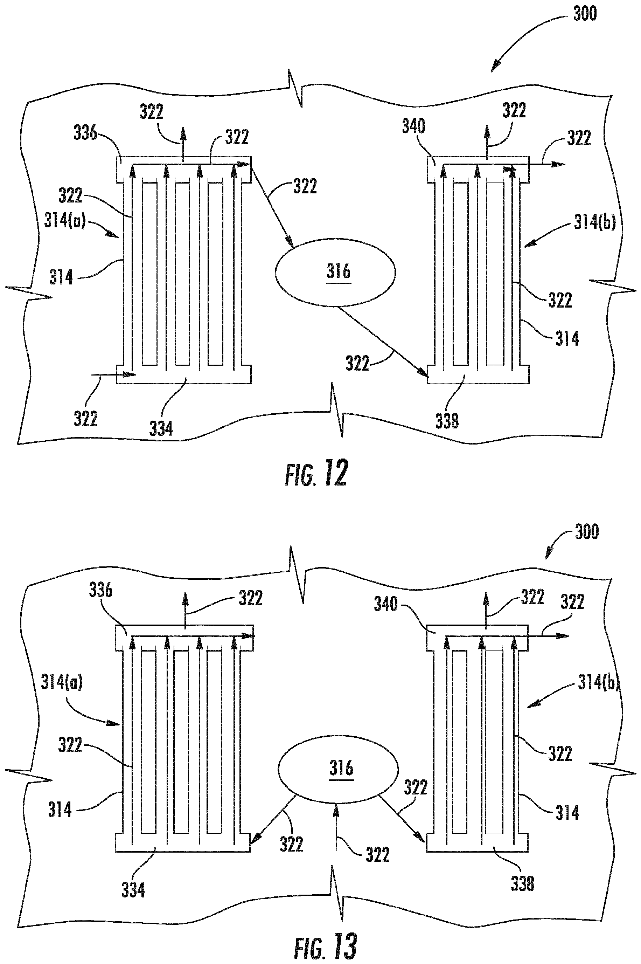

FIG. 12 provides a top view flow diagram of the outer band 300 according to the embodiment shown in FIG. 10. In operation, as shown in FIGS. 10 and 12 collectively, the coolant 322 travels through the inlet passage 326 and into the various cooling channels 314 of the first set of cooling channels 314(a), thus providing cooling to the gas side surface 318 above the cooling channels 314. For example, as shown in FIG. 12, the coolant 322 may flow into a first coolant trench 334 which feeds the individual cooling channels 314 of the first set of cooling channels 314(a). The coolant 322 may then flow from the cooling channels 314 into a second coolant trench 336 and then on to the coolant distribution plenum 316 where it may be used to cool another portion of the outer band 300. The coolant 322 may then flow to a third coolant trench 338 which feeds the individual cooling channels 314 of the second set of cooling channels 314(b), thus providing cooling to the gas side surface 318 above the cooling channels 314 of the second set of cooling channels 314(b). The coolant 322 may then be exhausted from coolant exhaust port 328 which may be in fluid communication with a fourth coolant trench 340 to provide film cooling to the gas side surface 318 and/or from coolant exhaust port 330 to help form a seal between adjacent inner bands 300 of circumferentially adjacent turbine nozzles 100.

In particular embodiments, a portion of the coolant 322 may be exhausted from coolant exhaust port 332 to provide film cooling to the backside surface 318 proximate to the first set of cooling channels 314(a). Pressure within the coolant distribution plenum 316 is generally lower than pressure in the first set of cooling channels 314(a), pressure in the second set of cooling channels 314(b) is generally lower than pressure in the coolant distribution plenum and pressure just outside of the coolant exhaust ports 328, 320 and 330 is generally lower than the pressure in the first or second cooling channels 314(a), 314(b).

In one embodiment, as shown in FIG. 11, an inlet passage 342 provides for fluid communication or direct fluid communication between the coolant supply and the coolant distribution plenum 316. The inlet passage 342 may have an inlet disposed along the back side 304 of the outer band 300. The first set of cooling channels 314(a) and the second set of cooling channels 314(b) are directly downstream from the coolant distribution plenum 316. In one embodiment, the first set of cooling channels 314(a) is in fluid communication with at least one coolant exhaust port 344 defined along the gas side surface 318 of the outer band 300 and/or at least one coolant exhaust port 346 defined along the suction side wall 310 of the outer band 300. The second set of cooling channels 314(b) is in fluid communication with at least one coolant exhaust port 348 defined along the gas side surface 318 of the outer band 300 and/or at least one coolant exhaust port 350 defined along the pressure side wall 312 of the outer band 300.

FIG. 13 provides a top view flow diagram of the outer band 300 according to the embodiment shown in FIG. 11. In operation, as shown in FIGS. 11 and 13, the coolant 322 travels through the inlet passage 334 and into the coolant distribution plenum 316 where it may be used to provide cooling within the outer band 300. The coolant 322 is then distributed to the various cooling channels 314 of the first set of cooling channels 314(a) via coolant trench 334 and the various cooling channels 314 of the second set of cooling channels 314(b) via coolant trench 338. As the coolant flows through the cooling channels 314, cooling is provided to the gas side surface 318 above the cooling channels 314 of the first set of cooling channels 314(a) and above the second set of cooling channels 314(b). The coolant 322 may then be exhausted from the first set of cooling channels 314(a) via coolant trench 336 and one or more of coolant exhaust port 344 to provide film cooling to the gas side surface 318 and/or from coolant exhaust port 346 via coolant trench 340 to help form a seal between adjacent outer bands 300 of circumferentially adjacent turbine nozzles 100.

In addition or in the alternative, the coolant 322 may then be exhausted from the second set of cooling channels 314(b) via one or more of coolant exhaust port 348 to provide film cooling to the gas side surface 318 and/or from coolant exhaust port 350 to help form a seal between adjacent outer bands 300 of circumferentially adjacent turbine nozzles 100. Pressure within the coolant distribution plenum 316 is generally higher than pressure in the first set of cooling channels 314(a) or the pressure within the second set of cooling channels 314(b).

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal language of the claims.

## Claims

1. A turbine nozzle (100), comprising:
an airfoil (400) that extends in span from an inner band (200) to an outer band (300), wherein the inner band (200) and the outer band (300) define inner and outer flow boundaries of the turbine nozzle (100);
wherein a first set of cooling channels (214a, 314a) and a second set of cooling channels (214b, 314a) are provided in at least one of the inner band (200) and the outer band (300) and beneath a gas side surface (218, 318) of the band (200,300),
wherein a coolant distribution plenum (216, 316) is enclosed in the band (200, 300) and is provided in fluid communication with the first and second sets of cooling channels (214a, 214b; 314a, 314b), wherein an inlet passage (226, 326) is provided in the band (200, 300) and provides for direct fluid communication between a coolant supply and the first set of cooling channels (214a, 314a),
**characterized in that** the first set of cooling channels (214a, 314a) is fluidly connected directly downstream from the inlet passage (226, 326), the coolant distribution plenum (216, 316) is fluidly connected directly downstream from the first set of cooling channels (214a, 314a), and the second set of cooling channels (214b, 314b) is fluidly connected directly downstream from the coolant distribution plenum (216, 316).

2. The turbine nozzle (100) as in claim 1, wherein the second set of cooling channels (214b, 314b) is in fluid communication with at least one coolant exhaust port (228, 328) opening out onto the gas side surface (218, 318) of the band (200, 300).

3. The turbine nozzle (100) as in claim 1, wherein the first set of cooling channels (214a, 314a) is in fluid communication with at least one coolant exhaust port (232, 332) opening out onto the gas side surface (218, 318) of the band (200, 300).

4. The turbine nozzle as in claim 1, wherein the inlet passage (226, 242, 326, 342) opens out onto a back side (204, 304) of the band (200, 300) opposed the gas side surface (218, 318).

5. The turbine nozzle as in any of the preceding claims, wherein all cooling channels of the first set of cooling channels (214a, 314a) are fluidly interconnected with each other.

6. The turbine nozzle as in any of the preceding claims, wherein all cooling channels of the second set of cooling channels (214b, 314b) are fluidly interconnected with each other.

7. The turbine nozzle as in any of the preceding claims, wherein the first set of cooling channels (214a, 314a) and the second set of cooling channels (214b, 314b) are fluidly isolated from each other apart from a fluid connection provided over the coolant distribution plenum.

## Patentansprüche

1. Turbinendüse (100), umfassend:
ein Schaufelblatt (400), das sich in Spannweite von einem Innenband (200) zu einem Außenband (300) erstreckt, wobei das Innenband (200) und das Außenband (300) innere und äußere Strömungsgrenzen der Turbinendüse (100) definieren;
wobei ein erster Satz von Kühlkanälen (214a, 314a) und ein zweiter Satz von Kühlkanälen (214b, 314a) in mindestens einem von dem Innenband (200) und dem Außenband (300) und unterhalb einer gasseitigen Oberfläche (218, 318) des Bandes (200, 300) bereitgestellt sind,
wobei ein Kühlmittelverteilungsplenum (216, 316) im Band (200, 300) eingeschlossen ist und in Fluidverbindung mit dem ersten und dem zweiten Satz von Kühlkanälen (214a, 214b; 314a, 314b) bereitgestellt ist, wobei ein Einlassdurchgang (226, 326) in dem Band (200, 300) bereitgestellt ist und eine direkte Fluidverbindung zwischen einer Kühlmittelversorgung und dem ersten Satz von Kühlkanälen (214a, 314a) bereitstellt,
**dadurch gekennzeichnet, dass** der erste Satz von Kühlkanälen (214a, 314a) direkt stromabwärts von dem Einlassdurchgang (226, 326) fluidtechnisch verbunden ist, wobei das Kühlmittelverteilungsplenum (216, 316) direkt stromabwärts von dem ersten Satz von Kühlkanälen (214a, 314a) fluidtechnisch verbunden ist, und der zweite Satz von Kühlkanälen (214b, 314b) direkt stromabwärts von dem Kühlmittelverteilungsplenum (216, 316) fluidtechnisch verbunden ist.

2. Turbinendüse (100) nach Anspruch 1, wobei der zweite Satz von Kühlkanälen (214b, 314b) in Fluidverbindung mit mindestens einem Kühlmittelabgasport (228, 328) steht, der sich auf die gasseitige Oberfläche (218, 318) des Bandes (200, 300) öffnet.

3. Turbinendüse (100) nach Anspruch 1, wobei der erste Satz von Kühlkanälen (214a, 314a) in Fluidverbindung mit mindestens einem Kühlmittelabgasport (232, 332) steht, der sich auf die gasseitige Oberfläche (218, 318) des Bandes (200, 300) öffnet.

4. Turbinendüse nach Anspruch 1, wobei der Einlassdurchgang (226, 242, 326, 342) sich auf eine Rückseite (204, 304) des Bandes (200, 300) gegenüber der gasseitigen Oberfläche (218, 318) öffnet.

5. Turbinendüse nach einem der vorstehenden Ansprüche, wobei alle Kühlkanäle des ersten Satzes von Kühlkanälen (214a, 314a) fluidtechnisch miteinander verbunden sind.

6. Turbinendüse nach einem der vorstehenden Ansprüche, wobei alle Kühlkanäle des zweiten Satzes von Kühlkanälen (214b, 314b) fluidtechnisch miteinander verbunden sind.

7. Turbinendüse nach einem der vorstehenden Ansprüche, wobei der erste Satz von Kühlkanälen (214a, 314a) und der zweite Satz von Kühlkanälen (214b, 314b) von einer Fluidverbindung, die über dem Kühlmittelverteilungsplenum bereitgestellt ist, fluidtechnisch voneinander isoliert sind.

## Revendications

1. Buse de turbine (100) comprenant :
une surface portante (400) qui s'étend dans la plage depuis une bande interne (200) à une bande externe (300), la bande interne (200) et la bande externe (300) définissant des limites d'écoulement interne et externe de la buse de turbine (100) ;
dans laquelle un premier ensemble de canaux de refroidissement (214a, 314a) et un deuxième ensemble de canaux de refroidissement (214b, 314a) sont prévus dans au moins l'une de la bande interne (200) et la bande externe (300) et sous une surface latérale de gaz (218, 318) de la bande (200, 300),
dans laquelle un plénum de distribution de réfrigérant (216, 316) est enclos dans la bande (200, 300) et est fourni en communication fluidique avec les premier et deuxième ensembles de canaux de refroidissement (214a, 214b ; 314a, 314b), un passage d'entrée (226, 326) étant fourni dans la bande (200, 300) et fournissant une communication fluidique directe entre une alimentation en réfrigérant et le premier ensemble de canaux de refroidissement (214a, 314a),
**caractérisée en ce que** le premier ensemble de canaux de refroidissement (214a, 314a) est relié fluidiquement directement en aval du passage d'entrée (226, 326), le plénum de distribution de réfrigérant (216, 316) est relié fluidiquement directement en aval du premier ensemble de canaux de refroidissement (214a, 314a), et le deuxième ensemble de canaux de refroidissement (214b, 314b) est relié fluidiquement directement en aval du plénum de distribution de réfrigérant (216, 316).

2. Buse de turbine (100) selon la revendication 1, dans laquelle le deuxième ensemble de canaux de refroidissement (214b, 314b) est en communication fluidique avec au moins un orifice d'échappement de réfrigérant (228, 328) débouchant sur la surface latérale de gaz (218, 318) de la bande (200, 300).

3. Buse de turbine (100) selon la revendication 1, dans laquelle le premier ensemble de canaux de refroidissement (214a, 314a) est en communication fluidique avec au moins un orifice d'échappement de réfrigérant (232, 332) débouchant sur la surface latérale de gaz (218, 318) de la bande (200, 300).

4. Buse de turbine selon la revendication 1, dans laquelle le passage d'entrée (226, 242, 326, 342) débouche sur une face arrière (204, 304) de la bande (200, 300) opposée à la surface latérale de gaz (218, 318).

5. Buse de turbine selon l'une quelconque des revendications précédentes, dans laquelle tous les canaux de refroidissement du premier ensemble de canaux de refroidissement (214a, 314a) sont interconnectés fluidiquement l'un à l'autre.

6. Buse de turbine selon l'une quelconque des revendications précédentes, dans laquelle tous les canaux de refroidissement du deuxième ensemble de canaux de refroidissement (214b, 314b) sont interconnectés fluidiquement l'un à l'autre.

7. Buse de turbine selon l'une quelconque des revendications précédentes, dans laquelle le premier ensemble de canaux de refroidissement (214a, 314a) et le deuxième ensemble de canaux de refroidissement (214b, 314b) sont isolés fluidiquement l'un de l'autre à l'écart d'une connexion fluidique fournie pardessus le plénum de distribution de réfrigérant.
